# EUROPEAN PATENT APPLICATION

(11) **EP 1 052 346 A2**
(43) Date of publication of application: **15.11.2000**
(21) Application number: 00109154.5
(22) Date of filing: 08.05.2000
(51) Int. Cl.: E04H 17/20

(54) **Stake**

(30) Priority: 11.05.1999 IT PD990053
(71) Applicant: Tesolin, Gianantonio, 31045 Motta di Livenza (IT)
(72) Inventor: Tesolin, Gianantonio, 31045 Motta di Livenza (IT)
(74) Representative: Modiano, Guido, Dr.-Ing.

(57) **Abstract**

A stake which comprises a pole (11) to be driven into the ground and with which a box-like support (15) is associated. The support (15) is open upwards and on the side that faces the pole (11) and is shaped so as to form, in a region interposed between the pole and the support, a resting portion (17) on which a scaffolding element (18) to be anchored to the stake can be arranged. A wedge-like fixing element (22) can be inserted in the support (15) and is adapted to be interposed between the support and the scaffolding element, so as to clamp the element (18) against the pole (11).

## Description

The present invention relates to a stake.

It is well-known that in the field of building and in road yards it is often necessary to firmly anchor to the ground structures such as formwork, scaffolding, fences or portions of prefabricated items.

This function is currently usually performed by wood stakes, at the end of which planks are nailed which lock the parts to be fixed.

This operation very often has to be performed on gravelly, packed or dry soil, such as a roadside, a yard or an embankment.

Accordingly, it is rather difficult to drive wood stakes into the ground with conventional systems.

Besides, the wood stake can be hardly used more than once, since it deforms when driven into the ground.

The aim of the present invention is to provide a stake which can satisfactorily solve all the above drawbacks.

An object of the present invention is to provide a stake whose structure is sturdy and at the same time very simple.

Another object of the present invention is to provide a stake which can be driven into any type of ground, even if it is very packed or contains gravel or other debris.

Another object is to provide a stake which can be reused many times.

Another object of the present invention is to provide a stake which can be driven into the ground with conventional systems but also with a pneumatic or electric hammer.

Another object is to provide a stake which requires no maintenance and is very compact.

These and other objects which will become better apparent hereinafter are achieved by a stake characterized in that it comprises a pole to be driven into the ground and with which a box-like support is associated, said support being open upwards and on the side that faces said pole and being shaped so as to form, in a region interposed between said pole and said support, a resting portion on which a scaffolding element to be anchored to said stake can be arranged, a wedge-like fixing element being insertable in said support and being adapted to be interposed between said support and said scaffolding element, so as to clamp said element against said pole.

Further characteristics and advantages of the present invention will become better apparent from the description of a preferred embodiment, illustrated only by way of non-limitative example in the accompanying drawings, wherein:

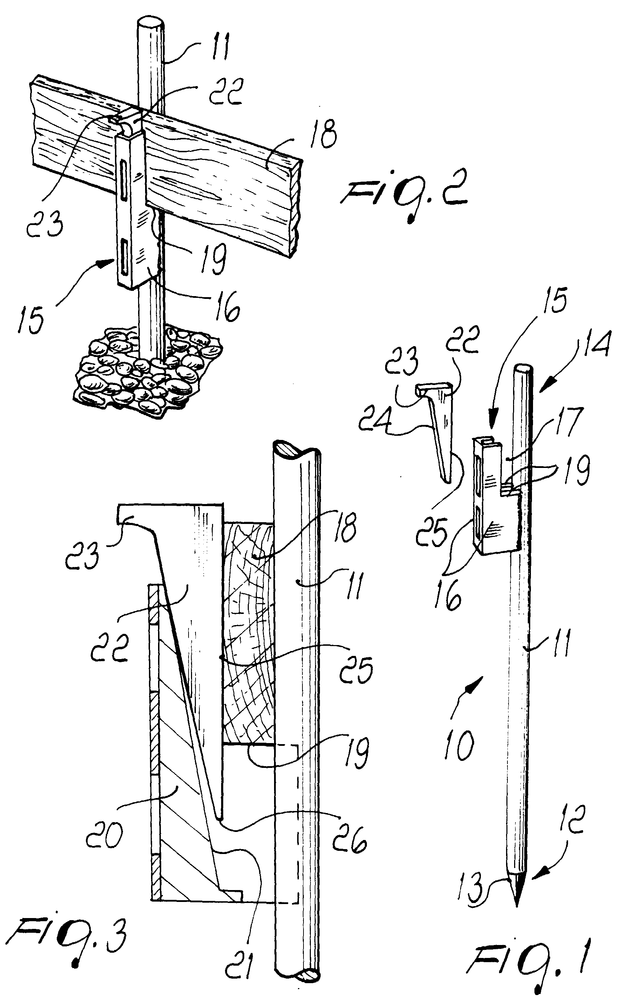

Figure 1 is a perspective exploded view of a stake according to the present invention;
Figure 2 is a perspective view of the stake of Figure 1 in the active configuration;
Figure 3 is a sectional view, taken along a transverse plane, of a detail of the stake of Figure 2.

With reference to the above figures, a stake according to the present invention is generally designated by the reference numeral 10 and comprises a pole 11 which is provided, in the case, by means of a steel rod which has, at a first end 12, a point 13 to assist in driving it into the ground.

A substantially L-shaped box-like support 15 is associated with the pole 11, proximate to the second end 14, in this case by welding.

The support 15 is formed by the coupling of two parallel L-shaped flat faces 16, so that as a whole it can be accessed from above and has a U-shaped cross-section.

In particular, the support 15 is welded to the pole 11 so that its L-shaped contour is parallel to the pole 11, thus forming between them a region 17 in which it is possible to interpose, so that it rests on two edges 19, a scaffolding element which, in this case, is constituted by a wood plank 18.

A complementary wedge 20 is welded at the corner region inside the support 15 and has an inclined plane 21 which ideally is incident to the axis of the pole 11 toward the point 13 with an acute angle.

An element for fixing the plank 18 can be inserted in the support 15 and comprises a wedge 22 which is provided with a grip protrusion 23.

In particular, the wedge 22, by entering the support 15 starting with its point 26, slides with its inclined plane 24 along the corresponding plane 21 of the complementary wedge 20, so that its opposite flat face 25 clamps the wood plank 18 against the pole 11.

In practice it has been observed that the stake according to the present invention has solved more than satisfactorily the aim and all the objects.

It is in fact sufficient to drive the pole 11 into the ground; the plank 18 can then be rested on the two edges 19 in the region 17 interposed between the pole 11 and the support 15.

The plank 18 is anchored to the stake 10 simply by inserting the wedge 22.

It should be noted in particular that the stake 10 can be reused several times, since by virtue of its sturdy structure it is not damaged in any way when it is driven into the ground.

In this embodiment, the stake 10 is entirely made of steel.

It should be noted that it is possible to use a pneumatic hammer or an electric hammer in order to drive the stake 10 into the ground after performing a simple and appropriate modification of the point of said hammer.

In summary, an important advantage has been achieved in view of the fact that a stake has been provided whose structure is sturdy and at the same time very simple and can be driven into any kind of ground, even if it is highly compacted or contains gravel or other debris.

Another advantage has been achieved by virtue of the present invention in that a stake has been provided which can be reused many times and requires no maintenance.

It is also interesting to note that the described stake has very compact overall dimensions and can be produced in practice with conventional equipment and systems.

All the details may furthermore be replaced with other technically equivalent elements.

The materials used, so long as they are compatible with the contingent use, as well as the dimensions, may be any according to requirements.

The disclosures in Italian Utility Model Application No. PD99U000053 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A stake, characterized in that it comprises a pole to be driven into the ground and with which a box-like support is associated, said support being open upwards and on the side that faces said pole and being shaped so as to form, in a region interposed between said pole and said support, a resting portion on which a scaffolding element to be anchored to said stake can be arranged, a wedge-like fixing element being insertable in said support and being adapted to be interposed between said support and said scaffolding element, so as to clamp said element against said pole.

2. The stake according to claim 1, characterized in that said support is formed by joining two flat and parallel L-shaped faces so as to have a U-shaped transverse cross-section.

3. The stake according to claim 2, characterized in that a complementary wedge is fixed inside said support and has an inclined plane which ideally is incident to the axis of the pole toward the part to be driven into the ground with an acute angle.

4. The stake according to claim 3, characterized in that said wedge enters said support starting from its point, sliding with its inclined plane along the corresponding inclined plane of said complementary wedge, so as to clamp said scaffolding element against said pole.

5. The stake according to claim 4, characterized in that said wedge has a grip protrusion on the side that lies opposite its point.

6. The stake according to one or more of the preceding claims, characterized in that said pole is provided by means of a steel rod.

7. The stake according to claim 6, characterized in that said support is made of steel and is welded to said pole.
